(19) Europäisches Patentamt
European Patent Office
Office européen des brevets

(11) **EP 4 397 180 A1**

(12) **EUROPEAN PATENT APPLICATION**
published in accordance with Art. 153(4) EPC

(43) Date of publication:
**10.07.2024 Bulletin 2024/28**

(21) Application number: **22876536.8**

(22) Date of filing: **30.09.2022**

(51) International Patent Classification (IPC):
***A01M 1/14*** *(2006.01)*

(52) Cooperative Patent Classification (CPC):
**A01M 1/14**

(86) International application number:
**PCT/JP2022/036694**

(87) International publication number:
**WO 2023/054674 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.10.2021 JP 2021162950**

(71) Applicants:
- **Kuraray Trading Co., Ltd.
  Osaka-shi, Osaka 530-8611 (JP)**
- **National University Corporation
  Tokyo University Of Agriculture and Technology
  Fuchu-shi
  Tokyo 183-8538 (JP)**

- **Kuraray Co., Ltd.
  Kurashiki-shi, Okayama 710-0801 (JP)**

(72) Inventors:
- **AKIBA Eiji
  Osaka-shi, Osaka 530-8611 (JP)**
- **SUZUKI Takeshi
  Fuchu-shi, Tokyo 183-8538 (JP)**
- **TAKASUKA Yuki
  Tokyo 100-0004 (JP)**

(74) Representative: **Müller-Boré & Partner
Patentanwälte PartG mbB
Friedenheimer Brücke 21
80639 München (DE)**

(54) **AMBULATORY PEST TRAPPING DEVICE**

(57)      An ambulatory pest trapping device (1) includes an upper sheet (2) on which ambulatory pests B is capable of crawling, a lower sheet (4) which is provided to face the upper sheet (2) and on which the ambulatory pests B is capable of crawling, and an adhesive sheet (8) provided between the upper sheet (2) and the lower sheet (4) and in which an intermediate sheet (3) is covered with an adhesive (5). The ridged pointed protrusions (7) made of the adhesive (5) covering the ends of the intermediate sheet 3 are provided for the adhesive sheet (8). The tip radius of curvature of each pointed protrusion (7) is 0.001 mm to 1.0 mm.

FIG.1

EP 4 397 180 A1

**Description**

TECHNICAL FIELD

The present invention relates to an ambulatory pest trapping device that traps, with an adhesive surface thereof, ambulatory pests such as spider mites.

BACKGROUND ART

In recent years, damage caused by agricultural pests that have acquired resistance to existing insecticides has been increasing. For example, crop damage has been spreading due to whiteflies, pests of the order *Hemiptera* such as stink bugs, greenflies, and scale insects, pests of the order *Thysanoptera,* and pests of the order *Acarina* such as families *Tetranychidae, Eriophyidae*, *Acaridae*, and *Tarsonemidae.*

In particular, pests of the order *Acarina* such as spider mites have high fecundity, and although they have natural enemies, insecticides kill the natural enemies themselves, resulting in the "resurgence" phenomenon, in which pests of the order *Acarina* that have acquired drug resistance are growing instead.

In view of this, there have been proposed devices that trap these pests. For example, there has been proposed a pest trapping device having a corrugated plate processed into a wavelike form and an adhesive body having an adhesive surface that faces the corrugated plate and is adhered to corrugated ridges of the corrugated plate. The pest trapping device is provided with pest entrance portions between the adhesive surface of the adhesive body and the corrugated ridges of the corrugated plate (see, for example, Patent Document 1).

CITATION LIST

PATENT DOCUMENT

Patent Document 1: Japanese Unexamined Patent Publication No. 2014-64499

SUMMARY OF THE INVENTION

TECHNICAL PROBLEM

The pest trapping device disclosed in Patent Document 1 traps pests by causing legs of the pests to stick to the adhesive surface. However, a contact area between the legs of the pests and the adhesive surface is small, which may disadvantageously result in insufficient adhesive strength, making it difficult to trap pests.

Therefore, the present invention has been made in view of the above-described problems, and an object of the present invention is to provide an ambulatory pest trapping device capable of efficiently trapping ambulatory pests including spider mites.

SOLUTION TO THE PROBLEM

The present inventors have conducted intensive studies to solve the above-described problems and have completed the present invention. Specifically, the present invention provides the following suitable aspects.

[1] An ambulatory pest trapping device comprising a pointed protrusion at least part of which is covered with an adhesive, wherein the pointed protrusion has a tip radius of curvature of 0.001 mm to 1.0 mm or less.

[2] The ambulatory pest trapping device of [1], wherein the pointed protrusion is ridged.

[3] The ambulatory pest trapping device of [1], wherein the pointed protrusion is cone-shaped.

[4] The ambulatory pest trapping device of [2], wherein a total length of the ridged pointed protrusion per unit area is from 10 mm/cm$^2$ to 1000 mm/cm$^2$ inclusive.

[5] The ambulatory pest trapping device of [3], wherein the number of apexes of the cone-shaped pointed protrusion is from 10/cm$^2$ to 1000/cm$^2$ inclusive.

[6] The ambulatory pest trapping device of [1], wherein the pointed protrusion includes at least one of a ridged pointed protrusion or cone-shaped pointed protrusion.

[7] The ambulatory pest trapping device of any one of [1] to [6], wherein at least part of the ambulatory pest trapping device includes a phosphorescent substance.

[8] The ambulatory pest trapping device of any one of [1] to [7], wherein the ambulatory pest is a pest of the order *Acarina.*

ADVANTAGES OF THE INVENTION

In the present invention, a pointed protrusion at least part of which is covered with an adhesive is included, and the pointed protrusion has a tip radius of curvature of 0.001 mm to 1.0 mm or less. This makes it possible to reliably trap ambulatory pests.

BRIEF DESCRIPTION OF THE DRAWINGS

FIG. 1 is a perspective view of an ambulatory pest trapping device according to a first embodiment of the present invention.

FIG. 2 is an enlarged front view of the ambulatory pest trapping device according to the first embodiment of the present invention.

FIG. 3 is a perspective view for explaining an adhesive sheet in the ambulatory pest trapping device according to the first embodiment of the present invention.

FIG. 4 is a C-C sectional view of FIG. 3, which is a partially enlarged view for explaining a pointed protrusion in the ambulatory pest trapping device according to the first embodiment of the present invention.

FIG. 5 is a diagram for explaining the definition of the pointed protrusion.

FIG. 6 is a diagram for explaining the total length of the pointed protrusion per unit area in the ambulatory pest trapping device according to the first embodiment of the present invention.

FIG. 7 is a diagram for explaining a method for producing the ambulatory pest trapping device according to the first embodiment of the present invention.

FIG. 8 is another diagram for explaining the method for producing the ambulatory pest trapping device according to the first embodiment of the present invention.

FIG. 9 is a perspective view of an ambulatory pest trapping device according to a second embodiment of the present invention.

FIG. 10 is a view as seen from an arrow A of FIG. 9.

FIG. 11 is a view as seen from an arrow B of FIG. 9.

FIG. 12 is a D-D sectional view of FIG. 9, which is a partially enlarged view for explaining a pointed protrusion in the ambulatory pest trapping device according to the second embodiment of the present invention.

FIG. 13 is a diagram for explaining a method for producing the ambulatory pest trapping device according to the second embodiment of the present invention.

FIG. 14 is a diagram for explaining a method for producing the ambulatory pest trapping device according to the second embodiment of the present invention.

FIG. 15 is another diagram for explaining the method for producing the ambulatory pest trapping device according to the second embodiment of the present invention.

FIG. 16 is a view as seen from an arrow Q of FIG. 15.

FIG. 17 is a perspective view for explaining the pointed protrusion in the ambulatory pest trapping device according to the second embodiment of the present invention.

FIG. 18 is a view as seen from an arrow K of FIG. 17.

FIG. 19 is a view as seen from an arrow G of FIG. 17.

FIG. 20 is a perspective view of a variation of the ambulatory pest trapping devices according to the embodiments of the present invention.

FIG. 21 is a perspective view of another variation of the ambulatory pest trapping devices according to the embodiments of the present invention.

FIG. 22 is a partially enlarged view for explaining a pointed protrusion of the ambulatory pest trapping device of FIG. 21.

FIG. 23 is a perspective view of another variation of the ambulatory pest trapping devices according to the embodiments of the present invention.

FIG. 24 is a partially enlarged view for explaining a pointed protrusion of the ambulatory pest trapping device of FIG. 23.

FIG. 25 is a perspective view of another variation of the ambulatory pest trapping devices according to the embodiments of the present invention.

FIG. 26 is a sectional view for explaining a pointed protrusion in the ambulatory pest trapping device of FIG. 25.

FIG. 27 is another sectional view for explaining the pointed protrusion in the ambulatory pest trapping device of FIG. 25.

FIG. 28 is a diagram for explaining the number of apexes of cone-shaped pointed protrusion per unit area in the ambulatory pest trapping device of FIG. 25.

FIG. 29 is a perspective view of another variation of the ambulatory pest trapping devices according to the embodiments of the present invention.

FIG. 30 is a perspective view for explaining a square box used in Examples.

FIG. 31 is a photograph showing the state where a pointed protrusion of an ambulatory pest trapping device of Example 1 traps twospotted spider mites.

FIG. 32 is a photograph showing the state where pointed protrusions of an ambulatory pest trapping device of Example 2 trap twospotted spider mites.

FIG. 33 is a perspective view of an ambulatory pest trapping device according to a third embodiment of the present invention.

FIG. 34 is a plan view of the ambulatory pest trapping device according to the third embodiment of the present invention.

FIG. 35 is a partially enlarged view for explaining a pointed protrusion of the ambulatory pest trapping device of FIG. 33.

FIG. 36 is a partially enlarged view for explaining a pointed protrusion of the ambulatory pest trapping device of FIG. 34.

FIG. 37 is a photograph showing the state where pointed protrusions of an ambulatory pest trapping device of Example 3 trap twospotted spider mites.

DETAILED DESCRIPTION

Embodiments of the present invention will be described in detail below, with reference to the drawings. The present invention is not limited to the embodiments below.

(First Embodiment)

Ambulatory pests in the present invention refer to pests that move by crawling or creeping among pests such as agricultural pests which eat crop plants such as grains, vegetables, and fruits cultivated in rice fields, fields, and the like and suck juices thereof to cause damage, sanitary pests that cause harm to human and animals by biting or stinging their bodies, and unpleasant pests that cause discomfort although they have little direct influence on the human bodies. Ambulatory pests also include pests which are flying pests but are capable of moving by crawling.

Examples of the agricultural pests include: whiteflies, stink bugs, greenflies, scale insects, pests of the order *Thysanoptera*, pests of the order *Acarina* such as families *Tetranychidae*, *Eriophyidae*, *Tarsonemidae*, *Acaridae*, and the like which are plant parasitic, larvae of butterflies and moths, and slugs. Examples of the sanitary pests and the unpleasant pests include bedbugs, ants, cockroaches, mites, centipedes, millipedes, and spiders.

<Ambulatory Pest Trapping Device>

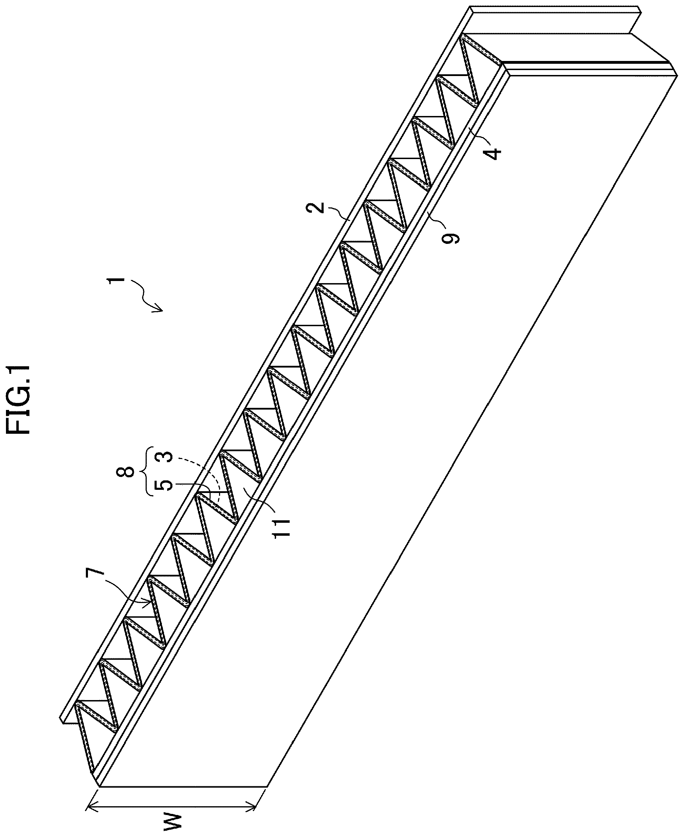

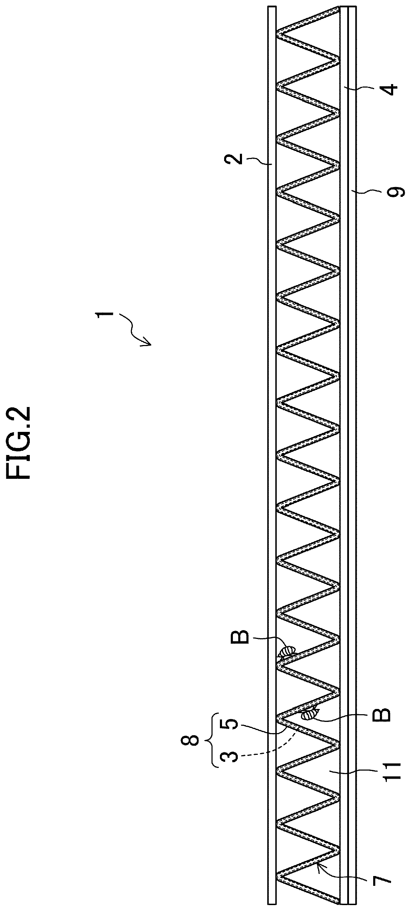

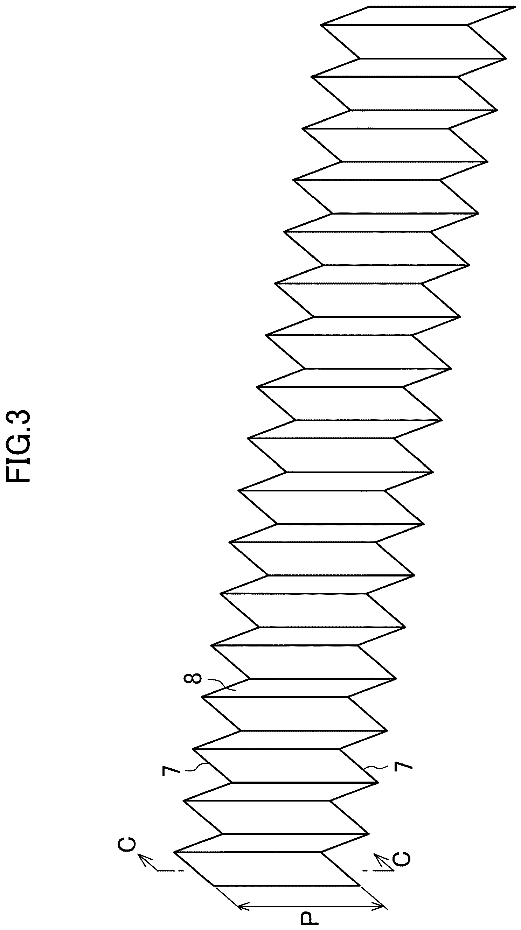

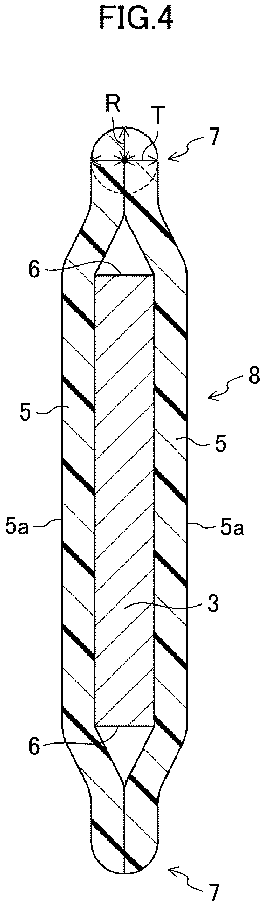

FIG. 1 is a perspective view of an ambulatory pest trapping device according to the first embodiment of the present invention. FIG. 2 is an enlarged front view of the ambulatory pest trapping device according to the first embodiment of the present invention. FIG. 3 is a perspective view for explaining an adhesive sheet in the ambulatory pest trapping device according to the first embodiment of the present invention. Fig. 4 is a C-C sectional view of FIG. 3, which is a partially enlarged view for explaining a pointed protrusion in the ambulatory pest trapping device according to the first embodiment of the present invention.

An ambulatory pest trapping device 1 according to the present embodiment includes an upper sheet 2 on which ambulatory pests B are capable of crawling, a lower sheet 4 which is provided to face the upper sheet 2 and on which the ambulatory pests B are capable of crawling, and a corrugated intermediate sheet 3 provided between the upper sheet 2 and the lower sheet 4.

Spaces 11 through which the ambulatory pests B can pass are formed between the upper sheet 2 and the intermediate sheet 3 and between the lower sheet 4 and the intermediate sheet 3.

As illustrated in FIGS. 1 to 4, in the ambulatory pest trapping device 1 according to the present embodiment, an adhesive sheet 8 in which the intermediate sheet 3 is covered with an adhesive 5 is provided, and ridged pointed protrusions 7 made of the adhesive 5 covering ends 6 of the intermediate sheet 3 is provided in the width direction P of the adhesive sheet 8.

The ambulatory pests 8 which have crawled on the upper sheet 2, the lower sheet 4, and the adhesive sheet 8 in which the intermediate sheet 3 is covered with the adhesive 5 reach the pointed protrusions 7 made of the adhesive 5. While the ambulatory pests B are crawling on the pointed protrusions 7, the abdomens thereof are adhered to the adhesive 5 forming the pointed protrusions 7, and the legs thereof are float in the air, so that the ambulatory pests B cannot move and are trapped.

As described above, in the ambulatory pest trapping device 1 according to the present embodiment, the ambulatory pests B can be trapped on the entire pointed protrusions 7 illustrated in FIGS. 1 to 3, i.e., the ambulatory pest trapping device 1 has a structure capable of efficiently trapping the ambulatory pests B and particularly can efficiently trap pests of the order *Acarina* such as families *Tetranychidae*, *Eriophyidae*, *Tarsonemidae*, *Acaridae*, and the like which are plant parasitic.

It is known that the order *Acarina,* particularly spider mites, has strong leg power and moves around in a wide range. Since the tips of the legs are pointed so as to easily climb the surface of the plant, the legs are not caught on the flat adhesive surface and can relatively freely move around. Therefore, it is difficult to trap the legs of spider mites by adhesion with a flat adhesive sheet.

In contrast, the ambulatory pest trapping device 1 according to the present embodiment is based on the findings obtained by observation of the behavior of spider mites, and when ambulatory pests such as spider mites move on the pointed protrusions 7 made of the adhesive 5, the tips of the pointed protrusions come into contact with the abdomens thereof, so that the ambulatory pests such as spider mites can be efficiently trapped.

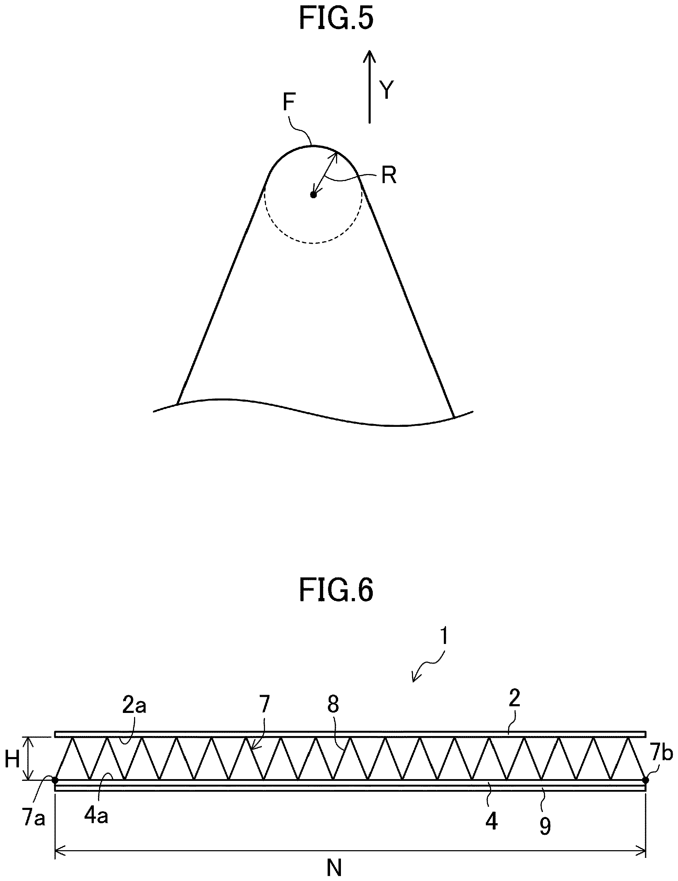

The "pointed protrusion" refers to, as illustrated in FIG. 5, a portion defined by the tip radius of curvature R (i.e., the circular portion of the tip surrounded by solid and dashed lines in FIG. 5) in a cross section of an object having a protrusion (corresponding to the cross section illustrated in FIG. 5, provided that the cross section of the object is parallel with the direction Y in which the protrusion is projecting and includes a top portion F of the protrusion, and when the protrusion is ridged, the cross section of the object is a cross section in the direction orthogonal to the length direction of the ridge (i.e., C-C cross section in FIG. 3)).

Further, the "tip radius of curvature R" refers to, as illustrated in FIG. 5, a radius of a circle closest to the shape of the pointed protrusion in the sectional view of the pointed protrusion.

In the present embodiment, the tip radius of curvature of the pointed protrusion 7 is 0.001 mm to 1.0 mm. If the tip radius of curvature is less then the lower limit, it is difficult to actually produce the pointed protrusion by injection molding, and the pointed protrusion becomes fragile and easily deformed, which is not preferable. If the tip radius of curvature is larger than the upper limit, the pointed protrusion becomes relatively gentle, and even if ambulatory pests move on the protrusion, it is difficult to catch them by adhering their abdomens, which is not preferable. The range of the tip radius of curvature R is preferably 0.005 mm to 0.5 mm, more preferably 0.01 mm to 0.2 mm.

With such a configuration, the ambulatory pests B crawling on the pointed protrusions 7 are easily caught by the pointed protrusions 7, and the abdomens thereof are easily adhered to the pointed protrusions 7, thereby improving the efficiency of trapping the ambulatory pests B.

For each of the pointed protrusions 7 of the present embodiment, as illustrated in FIG. 4, half of the thickness T of the adhesive (double-sided adhesive sheet) 5 forming the pointed protrusion 7 (i.e., T/2) is the tip radius of curvature R.

Further, in the present embodiment, the sum L of lengths of the ridged pointed protrusions 7 per unit area (1 $cm^2$) is preferably from 10 mm/$cm^2$ to 1000 mm/$m^2$ inclusive. When the sum L is larger than the lower limit, the trapping efficiency is not reduced, thereby providing excellent practicality. When the total length L is the upper limit or less, the distance between the ridges is not too small, and each ridge can independently exhibit the trapping efficiency.

Note that the "ridged" refers to the state where the pointed protrusions 7 are connected in a ridge line shape and have a specific length.

For example, in the ambulatory pest trapping device 1 illustrated in FIG. 6, the length of the ambulatory pest trapping device 1 is represented by N, and the height of the ambulatory pest trapping device 1 (i.e., the separation distance between the end 2a of the upper sheet 2 and the end 4a of the lower sheet 4) is represented by H. For example, if the length N is 10 cm, the height is 1 cm, and the total length of the pointed protrusion 7 (i.e., the length from end point 7a to end point 7b) is 360 mm, the sum L of lengths of the ridged pointed protrusions 7 per unit area (1 $cm^2$) is 360 [mm]/(10 [cm] $\times$ 1 [cm]) = 36 mm/$cm^2$.

With such a configuration, the number of pointed protrusions 7 per unit area increases. Thus, the ambulatory pests B crawling on the pointed protrusions 7 are easily caught by the pointed protrusions 7, and the abdomens thereof are easily adhered to the adhesive 5 forming the pointed protrusions 7, thereby improving the efficiency of trapping the ambulatory pests B.

The configuration continuously having a larger number of such structures allows more pointed protrusions to be secured. Further, in view of improving productivity, the ambulatory pest trapping device 1 may be configured by forming a sheet continuously having such structures in a roll shape and processing the sheet to have a predetermined width and a predetermined length.

Each size (the length N, the heigh H, the width W) of the ambulatory pest trapping device 1 is not particularly limited, and can be set appropriately according to the intended use. For example, when the ambulatory pest trapping device 1 is used to eliminate spider mites at a protected horticulture site, the length N thereof may be 30 cm to 100 cm, the height H thereof may be 1 cm to 5 cm, and the width thereof may be 1 cm to 5 cm, considering the size of spider mites (0.5 mm to 1 mm).

For example, when the ambulatory pest trapping device 1 is used to eliminate house dust mites at home or in a facility, the length N thereof may be 5 cm to 20 cm, the height H thereof may be 1 cm to 5 cm, and the width W thereof may be 1 cm to 5 cm, considering the size of the house dust mites (0.2 mm to 0.5 mm). In such a case, the ambulatory pest trapping device 1 may be placed in a gap between futons and under cushions and carpets where house dust mites are likely to be hiding.

<Upper Sheet and Lower Sheet>

The upper sheet 2 and the lower sheet 4 evenly hold the intermediate sheet 3 covered with the adhesive 5 to impart strength to the intermediate sheet 3 such that the intermediate sheet 3 can be handled as a sheet while providing floor surfaces on which the ambulatory pests B are capable of crawling.

The upper sheet 2 and the lower sheet 4 suitably have moderate irregularities that facilitate crawling of the ambulatory pests B, rather than having a smooth surface, and preferably have, for example, a roughness equal to or rougher than P600 according to ISO 6344-3.

Examples of the material for forming the upper sheet 2 and the lower sheet 4 include films made of cellulose-based paper and thermoplastic resins such as polyester resin, polyamide resin, polyvinyl chloride resin, polyolefin resin, and acrylic resin.

The upper sheet 2 and the lower sheet 4 used are flexible and thin, have good adhering properties with the adhesive 5, have endurance to the adhesive 5, and have good dimensional stability. The upper sheet 2 and the lower sheet 4 may have light-shielding properties or light transparency. When the ambulatory pest trapping device 1 is placed outdoors, the upper sheet 2 and the lower sheet 4 used are preferably water resistant or weather resistant.

Examples of the sheet having light-shielding properties may include a sheet of paper, polylaminated paper, and a film which are colored in black or any other medium-dark color.

As a light-transparent sheet, a transparent film including thermoplastic resin such as polyester resin, polyamide resin, polyvinyl chloride resin, polyolefin resin, or acrylic resin may be used.

When the ambulatory pests are house dust mites having a habit of preferring dark places, the upper sheet 2 having light-shielding properties makes it possible to trap more efficiently the ambulatory pests by using the habit. On the other hand, when the upper sheet 2 and the lower sheet 4 have light transparency, trapped ambulatory pests may be easily visible from the outside of the device.

intermediate Sheet>

The intermediate sheet 3 is sandwiched between the upper sheet 2 and the lower sheet 4 to hold the pointed protrusions 7 made of the adhesive 5.

Examples of the material for forming the intermediate sheet 3 include films made of cellulose-based paper and thermoplastic resins such as polyester resin, polyamide resin, polyvinyl chloride resin, polyolefin resin, acrylic resin, as for the upper sheet 2 and the lower sheet 4 described above.

The upper sheet 2 and the lower sheet 4 used are flexible and thin, have good adhering properties with the adhesive 5, have endurance to the adhesive 5, and have good dimensional stability. When the ambulatory pest trapping device 1 is placed outdoors, the upper sheet 2 and the lower sheet 4 used are preferably water resistant or weather resistant.

<Adhesive>

The adhesive 5 is configured to come into contact with ambulatory pests B and traps the ambulatory pests B by its adhesive surface. The adhesive 5 is not particularly limited as long as having appropriate adhesiveness for trapping the ambulatory pests B. The adhesive 5 may be made of an acrylic, rubber-based, SIS block-based, silicon-based, or urethan-based adhesive. Note that these adhesives may be used alone or in combination of two or more of them.

As the adhesive 5, a double-sided adhesive sheet may also be used. In such a case, the double-sided adhesive sheet includes a sheet-like substrate and adhesives applied on both sides of the substrate, and the substrate sandwiched between the adhesives is not particularly limited, and a thin sheet-like substrate such as paper and a film can be used.

In view of reliably trapping the ambulatory pests B, the adhesive sheet 5 is preferably a permanently bonding adhesive sheet that bonds a target to be adhered semi-permanently once the adhesive sheet is adhered to the target. A removable adhesive sheet that is to be peeled off after sticking for a certain period of time has relatively worse adhesiveness and may thus be not preferably used.

<Phosphorescent Substance>

The ambulatory pest trapping device 1 of the present embodiment may contain a phosphorescent substance. The phosphorescent substance attracts ambulatory pests and easily guides them into the pointed protrusions 7.

More specifically, for example, it is known that nondormant female spider mites which act from spring to autumn have a property of avoiding ultraviolet light and preferring visible light, and spider mites are attracted to visible light emitted by the phosphorescent substance in the ambulatory pest trapping device 1 of the present embodiment at night, and therefore, the trapping efficiency can be further improved.

The phosphorescent substance is not particularly limited as long as having an effect of attracting target ambulatory pests to be trapped, and examples thereof include a yellow-green luminescent phosphorescent pigment $(SrAl_2O_4{:}Eu, Dy)$, which is strontium aluminate activated with europium and dysprosium and blue-green luminescent phosphorescent pigment $(Sr_4Al1_4O_{25}{:}Eu, Dy)$.

The upper sheet 2, the lower sheet 4, the intermediate sheet 3, and the adhesive 5 may contain these phosphorescent substances. When the upper sheet 2, the lower sheet 4, and the intermediate sheet 3 are made of resin, the phosphorescent substance may be kneaded into the resin. In such a case, the phosphorescent substance is gradually released from the inside of the resin molded body, advantageously resulting in a longer lasting effect compared with surface-coated attractants.

<Attaching Adhesive Sheet>

As illustrated in FIGS. 1 to 2, the ambulatory pest trapping device 1 according to this embodiment includes an attaching adhesive sheet 9 on a surface of the lower sheet 4 opposite to the adhesive sheet 8. Therefore, when the ambulatory pest trapping device 1 is attached to a wall, it may be easily attached to the wall surface to be adhered. The attaching adhesive sheet 9 may be provided on the surface of the upper sheet 2 opposite to the adhesive sheet 8.

The attaching adhesive sheet 9 may also be used to stack the ambulatory pest trapping device 1 on another ambulatory pest trapping device 1 and integrate them.

In addition, the attaching adhesive sheet 9 may be made of an acrylic adhesive which is easily removable. Note that these adhesives may be used alone or in combination of two or more of them.

The method of using the ambulatory pest trapping device 1 is not particularly limited, and the ambulatory pest trapping device 1 in a cylindrical shape may be placed to surround the periphery of nursery plant, for example. More specific examples of such a method include placing the ambulatory pest trapping device 1 to surround the trunk of tree, placing the ambulatory pest trapping device 1 like a fence around plant such as vegetable seedling, and placing the ambulatory pest trapping device 1 side by side at the root of plant.

(Method for Producing Ambulatory Pest Trapping Device)

Next, an example of a method for producing the ambulatory pest trapping device 1 of this embodiment will be described.

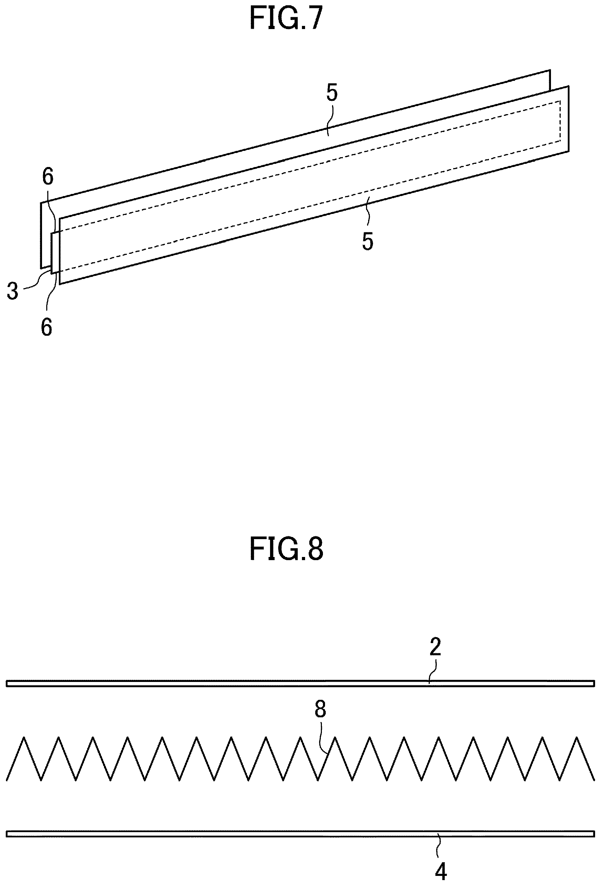

As illustrated in FIG. 7, two double-sided adhesive sheets 5 which are adhesives are arranged to face each other, and an intermediate sheet 3 intervenes therebetween

Then, from the state illustrated in FIG. 7, the two double-sided adhesive sheets 5 are attached to each other to completely cover the intermediate sheet 3 and adhered to each other so that portions of the double-sided adhesive sheets 5 covering the ends 6 of the intermediate sheet 3 are superimposed on each other. Thus, as illustrated in FIG. 4, an adhesive sheet 8 having ridged pointed protrusions 7 made of the double-sided adhesive sheets 5 covering the ends 6 of the intermediate sheet 3 is formed.

Then, the adhesive sheet 8 is folded at predetermined intervals in the longitudinal direction to form a corrugated adhesive sheet 8 illustrated in FIG. 3.

Then, as illustrated in FIG. 8, an upper sheet 2 and a lower sheet 4 are arranged to face each other, and the adhesive sheet 8 illustrated in FIG. 3 is interposed between the upper sheet 2 and the lower sheet 4.

Subsequently, from the state illustrated in FIG. 8, the upper sheet 2 and the lower sheet 4 are pressed toward the corrugated adhesive sheet 8 to bring the adhesive sheet 8 into contact with the upper sheet 2 and the lower sheet 4. Thus, an ambulatory pest trapping device 1 including pointed protrusions 7 can be formed as illustrated in FIGS. 1 to 2 and 4.

(Second Embodiment)

Next, the second embodiment of the present invention will be described. The same components as those of the first embodiment are denoted by the same reference numerals, and the description thereof will be omitted.

<Ambulatory Pest Trapping Device>

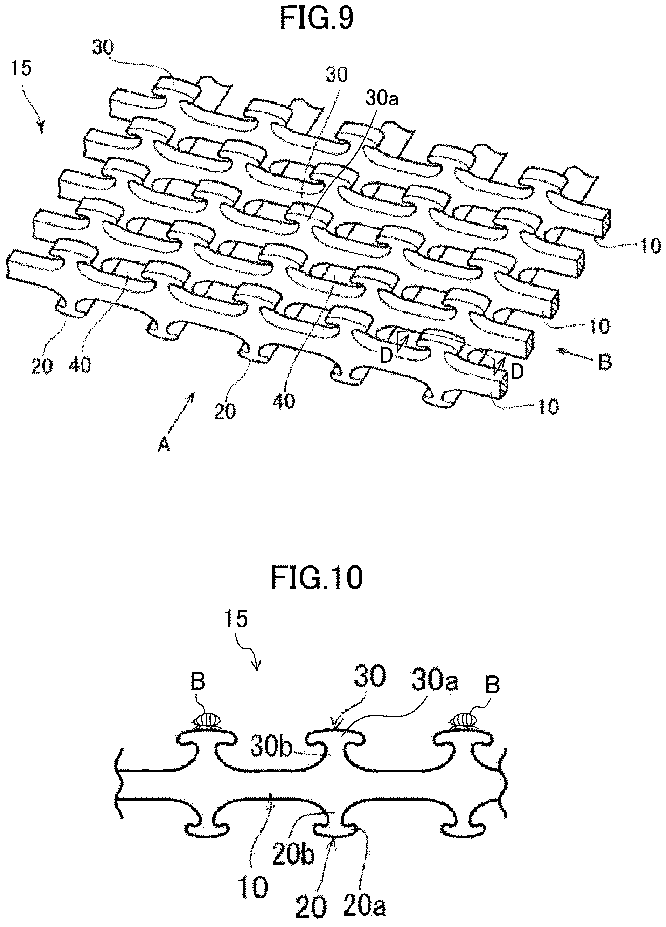

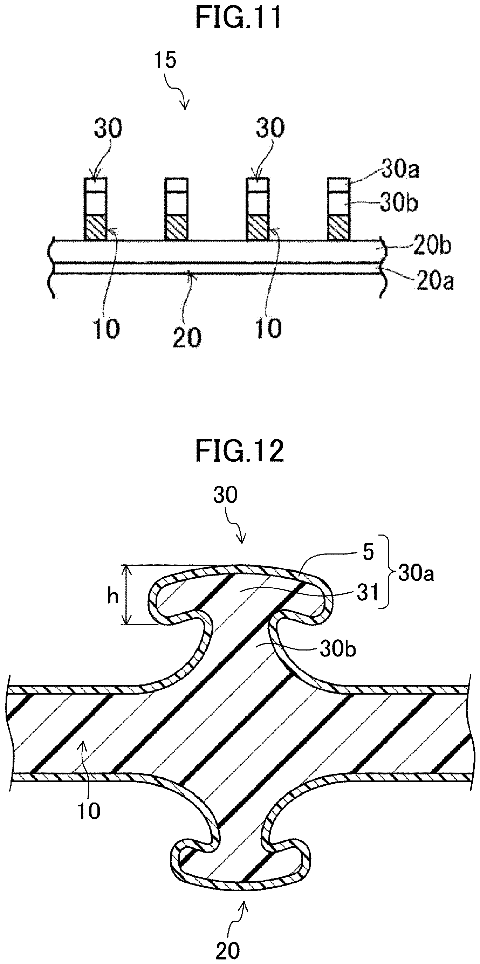

FIG. 9 is a perspective view of an ambulatory pest trapping device according to a second embodiment of the present invention. FIG. 10 is a view as seen from an arrow A of FIG. 9. FIG. 11 is a view as seen from an arrow B of FIG. 9. FIG. 12 is a D-D sectional view of FIG. 9, which is a partially enlarged view for explaining a pointed protrusion in the ambulatory pest trapping device according to the second embodiment of the present invention.

As illustrated in FIGS. 9 to 12, the ambulatory pest trapping device 15 of the present embodiment is configured such that an adhesive is provided on the surface of a mesh-like molded surface fastener made of thermoplastic resin.

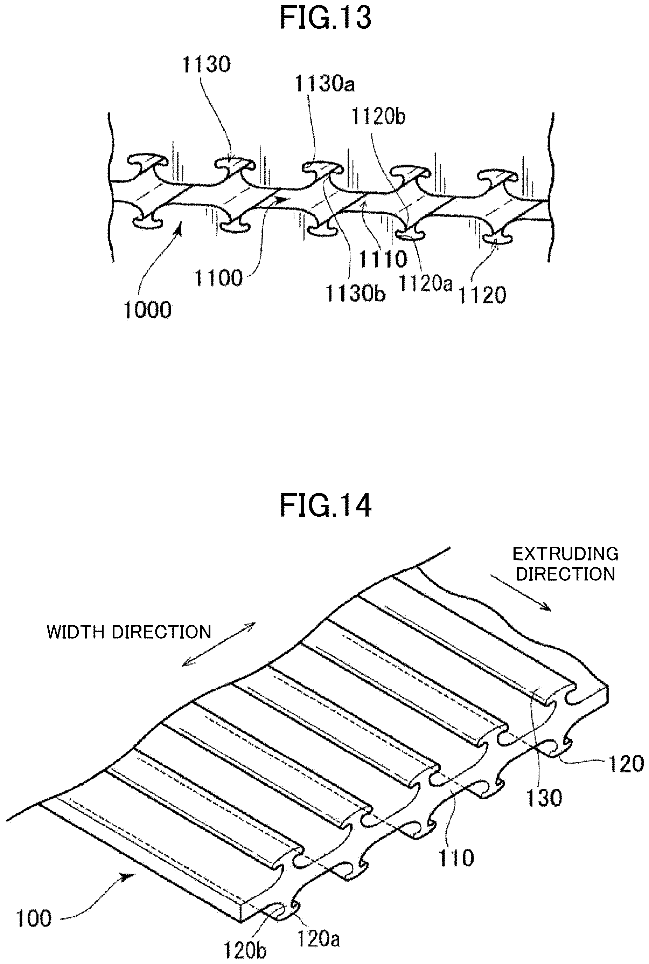

The ambulatory pest trapping device 15 includes first strands 10, second strands 20, engagement elements (hooks) 30, and pores 40 and is configured such that the adhesive 5 is provided on the surface of a mesh-like molded surface fastener made of a sheet-like molded body 100 (see FIG. 14) made of thermoplastic resin and by an extruder.

As illustrated in FIGS. 9 to 12, for the ambulatory pest trapping device 15 of the present embodiment, pointed protrusions 30a in each of which a flange portion 31 in the mesh-like molded surface fastener made of thermoplastic resin is covered with the adhesive 5 are provided.

In production of the ambulatory pest trapping device 15 of the present embodiment, first, a mesh-like molded surface fastener is made of thermoplastic resin by using a molding die 1000 of an extruder illustrated in FIG. 13.

The molding die 1000 has an opening 1100 as illustrated in FIG. 13, and in cross section thereof, the opening 1100 has an intermediate space 1110 having a predetermined width in a width direction (direction orthogonal to the extruding direction) and a height of several millimeters or less at a middle position in the vertical direction, a plurality of lower protruding spaces 1120 protruding downward of the intermediate space 1110 and formed at predetermined intervals in the width direction of the intermediate space 1110, and upper protruding spaces 1130 protruding upward opposite to the lower protruding spaces 1120.

Then, a molding material is fed into the molding die 1000 and extruded, so that as illustrated in FIG. 14, a flat base layer 110 is extruded from the intermediate space 1110, and lower ribs 120, which are one ribs, and upper ribs 130, which are the other rib, are extruded from the lower protruding spaces 1120 and the upper protruding spaces 1130, respectively.

Thus, a base layer 110 is formed as a sheet-like molded body 100 in which the lower ribs 120 as one ribs extending in the extruding direction on one surface and the upper ribs 130 as the other ribs extending in the extruding direction on the other surface are integral with each other.

The upper ribs 130 form engagement elements 30 each having a pointed protrusion 30a (see FIGS. 10 and 12) protruding outward in the width direction in the ambulatory pest trapping device 15. Thus, the sectional shape of the upper rib 130, i.e., the sectional shape of the upper protruding space 1130 of the molding die has: a portion 1130b corresponding to the stem 30b which matches the sectional shape of the engagement element 30 illustrated in FIGS. 10 and 12 and extends upward from the intermediate space 1110; and a portion 1130a protruding outward at its upper end (see FIG. 13).

In the present embodiment, as illustrated in FIG. 10, the second strand 20 includes a stem 20b protruding downward from the first strand 10 (base layer 110) and a parasol-like portion 20a protruding outward on both sides of the stem 20b in the width direction in a lower end portion of the stem 20b. Thus, the lower protruding space 1120 has a relatively narrow portion 1120b extending downward from the intermediate space 1110 and a wide portion 1120a protruding outward on both sides in the width direction in the lower end portion.

Therefore, in the lower rib 120 as one rib extruded from the lower protruding space 1120, a potion 120b extruded from the relatively narrow portion 1120b constitutes the stem 20b of the second strand 20, and a portion 120a extruded from the wide portion 1120a constitutes the parasol-like portion 20a of the second strand 20.

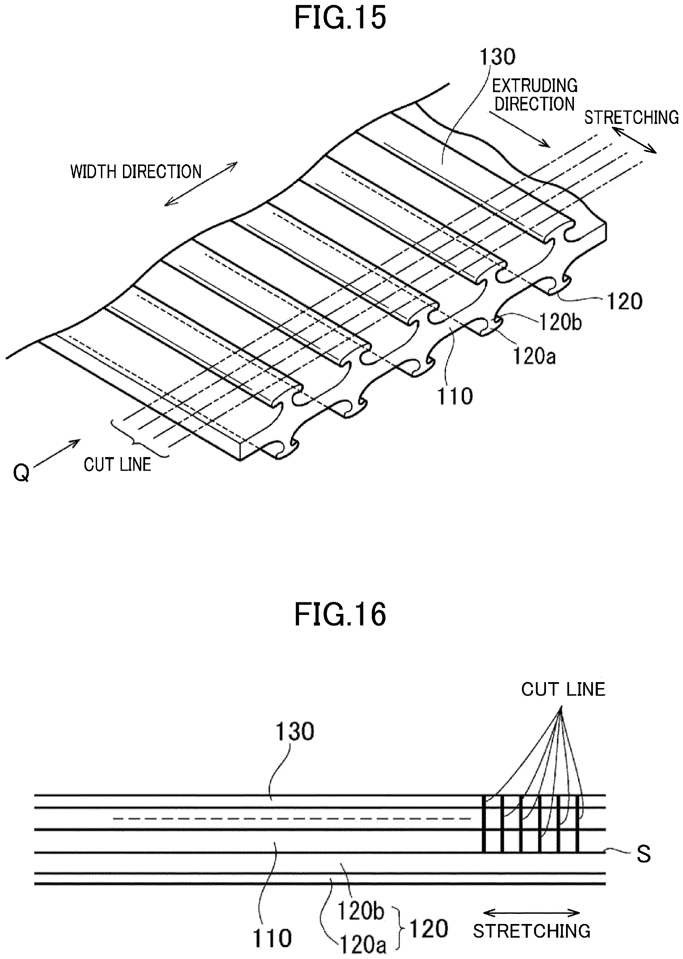

In the extruded sheet-like molded body 100, as illustrated in FIGS. 15 and 16, cuts are made from the tops of the upper ribs 130 to the boundary (the position indicated by reference sign S in FIG. 16) with the lower ribs 120 in the base layer 110 at predetermined intervals in the extruding direction as illustrated in FIG. 15 along the width direction orthogonal to the extruding direction or along the direction inclined at a predetermined angle with respect to the width direction.

Then, the sheet-like molded body 100 is stretched in the extruding direction illustrated in FIG. 15. Accordingly, as illustrated in FIGS. 15 to 16, the lower rib 120 extends in the stretching direction, while the upper ribs 130 and the base layer 110 are cut at predetermined intervals, so that portions between the cuts are separated from each other.

As a result, spaces are formed between the portions between the cuts, which serve as pores 40. The stretching continues until the pores 40 each have a predetermined size, and in this state, the sheet-like molded body 100 is cooled to fix that shape.

In such processes, the mesh-like molded surface fastener, which serves as a base of the ambulatory pest trapping device 15 of the present embodiment, is produced. Portions separated at the cuts of the base layer 110 serve as resin portions forming a plurality of first strands 10 provided in substantially parallel with each other at intervals as illustrated in FIGs 9 to 11, and the lower ribs 120 serve as resin portions forming a plurality of second strands 20 provided in substantially parallel with each other at intervals along the direction intersecting the longitudinal direction of the first strand 10. Further, portions separated at the cuts of the upper ribs 130 serve resin portions forming separated engagement elements 30.

Then, the mesh-like molded surface fastener is cut in predetermined dimensions according to the desired application, and an adhesive 5 is provided for the surface of the mesh-like molded surface fastener. Thus, an ambulatory pest trapping device 15 including pointed protrusions 30a in each of which a flange portion 31 in the molded surface fastener is covered with the adhesive 5 is produced as illustrated in FIGS. 9 to 12.

In the ambulatory pest trapping device 15 in which the adhesive 5 is provided for the surface of the mesh-like molded surface fastener which serves as a base, as illustrated in FIG. 9, the engagement elements 30 are provided to protrude on the opposite side of the second strands 20 across the first strands 10 (base layer 110).

Further, since a plurality of first strands 10 are arranged at intervals from each other, and a plurality of second strands 20 are arranged at intervals from each other so as to intersect the first strands 10, a pore 40 is formed at a position surrounded by adjacent first strands 10 and adjacent second strands 20.

Then, ambulatory pests B crawling on the ambulatory pest trapping device 15 reach hook-like pointed protrusions 30a covered with the adhesive 5, and while crawling on the pointed protrusions 30a, the abdomens thereof are adhered to the adhesive 5 forming the pointed protrusions 30a, and the legs thereof are float in the air, so that the ambulatory pests B cannot move and are trapped. As described above, in the ambulatory pest trapping device 15 according to the present embodiment, the ambulatory pests B can be trapped on the entire pointed protrusions 30a illustrated in FIGS. 9 to 12, i.e., the ambulatory pest trapping device 15 has a structure capable of efficiently trapping the ambulatory pests B.

In the present embodiment, the tip radius of curvature R of each pointed protrusion 30a is 0.001 mm to 1.0 mm. With such a configuration, the ambulatory pests B crawling on the pointed protrusions 30a are easily caught by the pointed protrusions 30a, and the abdomens thereof are easily adhered to the pointed protrusions 30a, thereby improving the efficiency of trapping the ambulatory pests B.

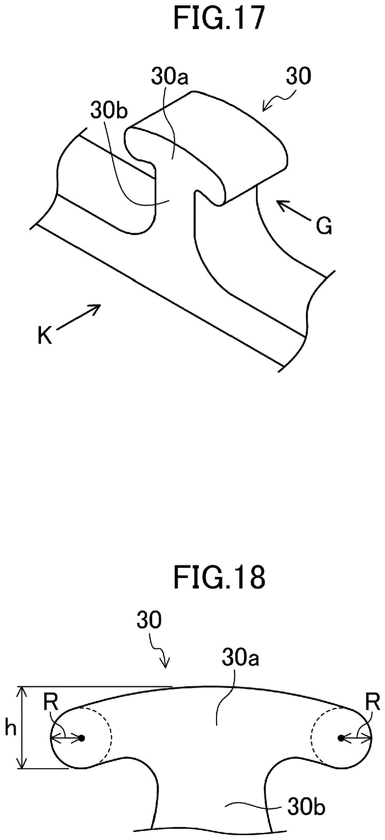

For the side portion (the view taken along the line K of FIG. 17) of the pointed protrusion 30a in the present embodiment, as illustrated in FIG. 18, for example, when the height h of the pointed protrusion 30a (see FIG. 12) is 0.2 mm, half of the height h (i.e., h/2) is the tip radius of curvature R (i.e., R = 0.1 mm).

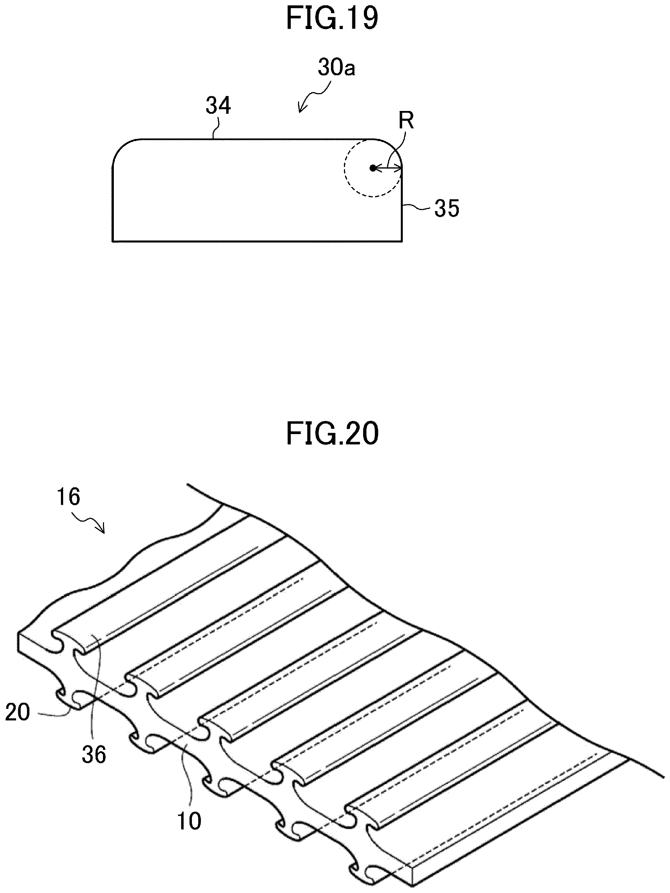

Further, as illustrated in FIG. 19, in the upper side portion of the pointed protrusion 30a (the view taken along the like G of FIG. 17), the tip radius of curvature R can be 0.01 mm, for example.

Each size of the ambulatory pest trapping device 15 is not particularly limited, and can be set appropriately set according to the intended use. For example, the pitch between the first strands 10 may be 2 mm to 4mm, the width of the second strand 20 may be 0.2 mm to 1.0 mm, and the width of the engagement element 30 may be 0.5 mm to 3 mm.

The method of using the ambulatory pest trapping device 15 is not particularly limited, and the ambulatory pest trapping device 15 in a ring shape may be placed around the crop plant or attached around a trunk of a fruit tree.

<Thermoplastic Resin>

Since the molded surface fastener made of thermoplastic resin is produced as described above, the first strands 10, the second strands 20, and the engagement elements 30 are integral with each other. Since the thermoplastic resin is used as a material, the first strands 10, the second strands 20, and the engagement elements 30 have predetermined strengths.

Examples of the thermoplastic resin forming the mesh-like molded surface fastener include nylon-based resin such as nylon 6 and nylon 66, polyester-based resin such as polylactic acid and polyethylene terephthalate and polybutylene terephthalate, and an ethylene-vinyl alcohol copolymer. In view of durability, heat resistance, molding processability, and the like, a thermoplastic polyester elastomer is preferably used. In view of ecology in disposal after use, bioplastics such as polyethylene terephthalate, polyethylene, polypropylene, polyamide, polytetraethylene terephthalate from biomass and biodegradable polylactic acid, polyhydroxyalkanoic acid, polybutylene succinate, polyethylene succinate, polyethylene succinate adipate, polybutylene adipate terephthalate, polycaprolactone, and the like can also be used.

(Third Embodiment)

Next, the third embodiment of the present invention will be described. The same components as those of the first embodiment are denoted by the same reference numerals, and the description thereof will be omitted.

The ambulatory pest trapping device of the present embodiment is characterized in that instead of the mesh-like molded surface fastener in the second embodiment above, paper or a mesh-like resin structure made of resin is used, and the paper or mesh-like resin structure with the adhesive described above on its surface is punched out, so that pointed protrusions covered with the adhesive are formed at least in part of the ambulatory pest trapping device.

<Ambulatory Pest Trapping Device>

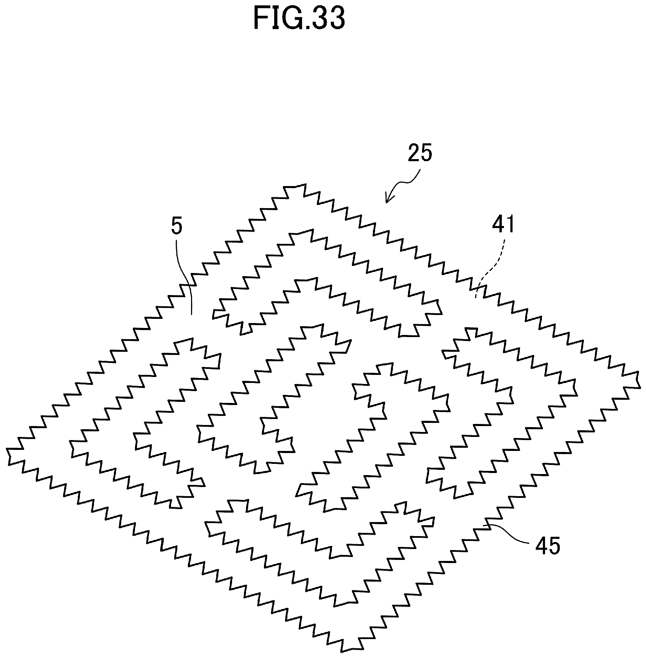

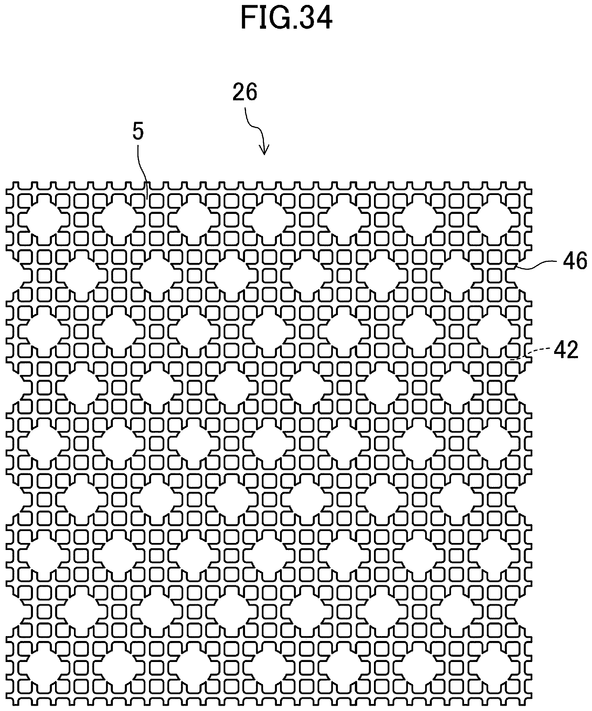

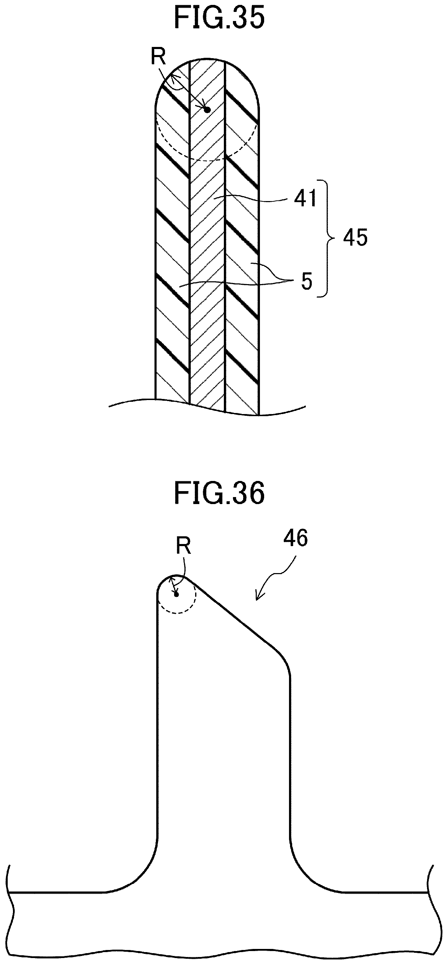

FIGS. 33 and 34 are schematic views of an ambulatory pest trapping device according to the third embodiment of the present invention. FIG. 35 is a partially enlarged view for explaining a pointed protrusion in the ambulatory pest trapping device illustrated in FIG. 33, and FIG. 36 is a partially enlarged view for explaining a pointed protrusion of the ambulatory pest trapping device illustrated in FIG. 34.

As the paper 41 serving as the base of the ambulatory pest trapping device 25 illustrated in FIG. 33, for example, a commercially available cardboard or the like can be used, and the ambulatory pest trapping device 25 is formed by punching out the paper having the adhesive 5 provided on the surface thereof. As illustrated in FIG. 33, for the ambulatory pest trapping device 25, pointed protrusions 45 formed by the punching out of the paper 41 serving as a base covered with the adhesive 5 are provided.

The mesh-like resin structure serving as a base of the ambulatory pest trapping device 26 illustrated in FIG. 34 can be produced by an extruder for producing a net made of low-density polyethylene, for example, and the ambulatory pest trapping device 26 is formed by punching out the mesh-like resin structure with the adhesive 5 provided on the surface thereof. As illustrated in FIG. 34, for the ambulatory pest trapping device 26, pointed protrusions 46 formed by the punching out of resin 42 for forming the mesh-like resin structure serving as a base covered with the adhesive 5 are provided.

As described above, in the present embodiment, the number of the pointed protrusions 45, 46 is increased as illustrated in FIGS. 33 and 34 by performing the punching process described above, and the increase causes the efficiency of trapping the crawling ambulatory pests B to be improved.

Ambulatory pests B crawling on the ambulatory pest trapping device 25, 26 reach pointed protrusions 45, 46 covered with the adhesive 5, and while crawling on the pointed protrusions 45, 46, the abdomens thereof are adhered to the adhesive 5 forming the pointed protrusions 45, 46, and the legs thereof are float in the air, so that the ambulatory pests B cannot move and are trapped. As described above, in the ambulatory pest trapping device 25 according to the present embodiment, the ambulatory pests B can be trapped on the entire pointed protrusions 45, 46 illustrated in FIGS. 33 and 34, i.e., the ambulatory pest trapping device 25, 26 has a structure capable of efficiently trapping the ambulatory pests B.

In the ambulatory pest trapping device 25, the tip radius of curvature R of the pointed protrusion 45 illustrated in FIG. 35 is 0.001 mm to 1.0 mm (e.g., 0.15 mm). Similarly, in the ambulatory pest trapping device 26, the tip radius of curvature R of the pointed protrusion 46 illustrated in FIG. 36 is 0.001 mm to 1.0 mm (e.g., 0.05 mm to 0.5 mm). With such a configuration, the ambulatory pests B crawling on the pointed protrusions 45, 46 are easily caught by the pointed protrusions 45, 46, and the abdomens thereof are easily adhered to the pointed protrusions 45, 46, thereby improving the efficiency of trapping the ambulatory pests B.

Further, as in the first embodiment, the sum L of the lengths of the pointed protrusions 45 (or the pointed protrusions 46) per unit area (1 cm$^2$) is preferably from 10 mm/cm$^2$ to 1000 mm/m$^2$ inclusive.

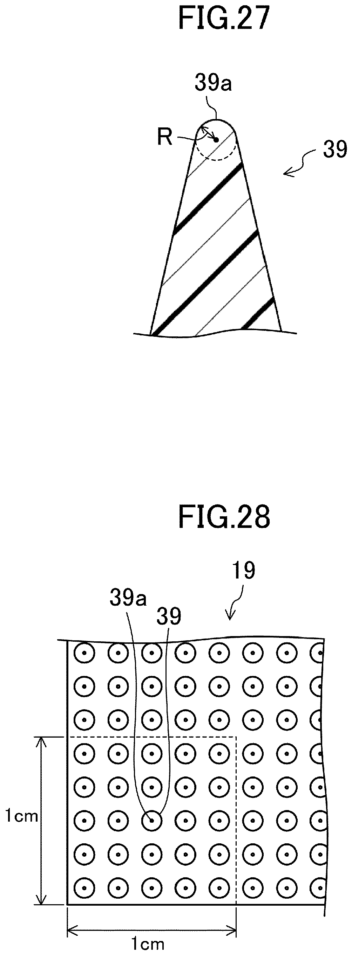

As in the ambulatory pest trapping device 19 illustrated in FIG. 28, the number P of apexes of the pointed protrusions 45 (or the pointed protrusions 46) per unit area (1 cm$^2$) is preferably from 10/cm$^2$ to 1000/cm$^2$ inclusive.

The pitch between the pointed protrusions 45 (or the pointed protrusions 46) is preferably such that the ambulatory pests B cannot easily move from one pointed protrusion 45 to the other pointed protrusion 45 (or one pointed protrusion 46 to the other pointed protrusion 46)

The embodiments may be modified as described below.

For example, in the second embodiment, the hook-like pointed protrusions 30a are provided. However, the shape of each pointed protrusion 30a is not particularly limited, and may be, for example, a cylindrical shape or a polygonal prism shape (such as a triangular prism shape, a quadrangular prism shape, or a hexagonal prism shape).

In the second embodiment, pointed protrusions 30a are provided for one surface (the first strand 10 side) of the ambulatory pest trapping device 15. However, pointed protrusions 30a may be provided for both surfaces (the first strand 10 side and the second strand 20 side).

In the second embodiment, the sheet-like molded body 100 is stretched to separate the portions with the cuts interposed therebetween, and thus the engagement elements 30 including the pointed protrusions 30a are provided to be separated from each other. However, as in the ambulatory pest trapping device 16 illustrated in FIG. 20, the sheet-like molded body 100 may not be stretched, the engagement elements 30 (i.e., the pointed protrusions 30a) may be continuous without separation, and ridged pointed protrusions 36 formed by the continuous pointed protrusions 30a may be provided.

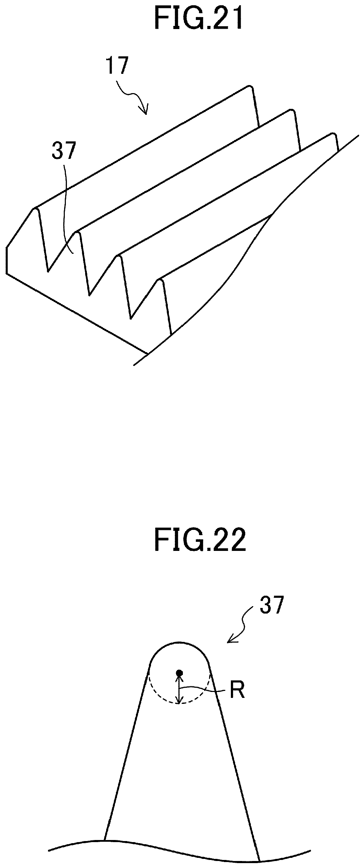

The shape of the ridged pointed protrusion 36 illustrated in FIG. 20 is not particularly limited, and for example, as in the ambulatory pest trapping device 17 illustrated in FIGS. 21 and 22, ridged pointed protrusions 37 each having a substantially triangular prism shape may be provided. In such a case, the tip radius of curvature R may be set to 0.05 mm.

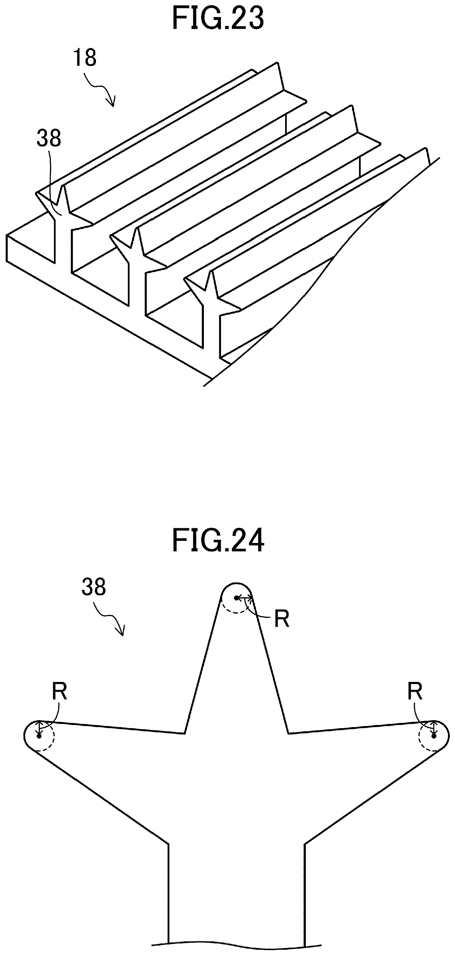

Similarly, for example, as in the ambulatory pest trapping device 18 illustrated in FIGs. 23 and 24, ridged pointed protrusions 38 having a substantially polygonal prism shape may be provided.. In such a case, the tip radius of curvature R may be set to 0.05 mm.

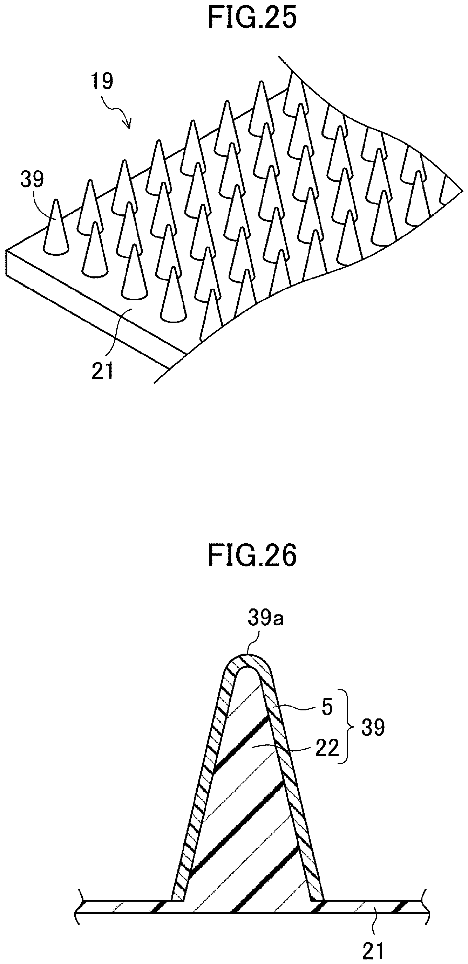

In the embodiments, ridged pointed protrusions are provided. However, cone-shaped pointed protrusions may be provided instead of the ridged pointed protrusions. More specifically, as in the ambulatory pest trapping device 19 illustrated in FIG. 25, a plurality of pointed protrusions 39 each having a substantially conical shape may be provided.

The pointed protrusion 39 includes, as illustrated in FIG. 26, a flange portion 22 integral with a base 21 and an adhesive 5 covering the flange portion 22. The base 21 and the flange portion 22 may be produced by injection molding, extrusion molding, and blow molding, or the like using polyethylene, for example. Also in such a case, the tip radius of curvature R illustrated in FIG. 27 may be set to 0.05 mm.

Then, ambulatory pests B crawling on the ambulatory pest trapping device 19 reach conical pointed protrusions 39 covered with the adhesive 5, and while crawling on the pointed protrusions 39, the abdomens thereof are adhered to the adhesive 5 forming the pointed protrusions 39, and the legs thereof are float in the air, so that the ambulatory pests B cannot move and are trapped. As described above, in the ambulatory pest trapping device 19, the ambulatory pests B can be trapped on the entire pointed protrusions 39 illustrated in FIG. 25, i.e., the ambulatory pest trapping device 19 has a structure capable of efficiently trapping the ambulatory pests B.

As in the ambulatory pest trapping device 19, the number P of apexes 39a of the cone-shaped pointed protrusions 39 per unit area (1 cm$^2$) is preferably from 10/cm$^2$ to 1000/cm$^2$ inclusive. When the number P is equal to or larger than the lower limit, the trapping efficiency is not reduced, thereby providing excellent practicality. When the number P is equal to or lower than the upper limit, the pointed protrusions can be formed with high producing accuracy.

In the ambulatory pest trapping device 19 illustrated in FIG. 28, the number of apexes 39a of the pointed protrusions 39 is 25/cm$^2$.

With such a configuration, the number of pointed protrusions 39 per unit area increases. Thus, the ambulatory pests B crawling on the pointed protrusions 39 are easily caught by the pointed protrusions 39, and the abdomens thereof are easily adhered to the adhesive 5 forming the pointed protrusions 39, thereby improving the efficiency of trapping the ambulatory pests B.

The shape of the pointed protrusion 39 illustrated in FIGS. 25 to 28 is not limited to a conical shape, and may be, for example, a polygonal pyramid shape (for example, a triangular pyramid shape or a quadrangular pyramid shape).

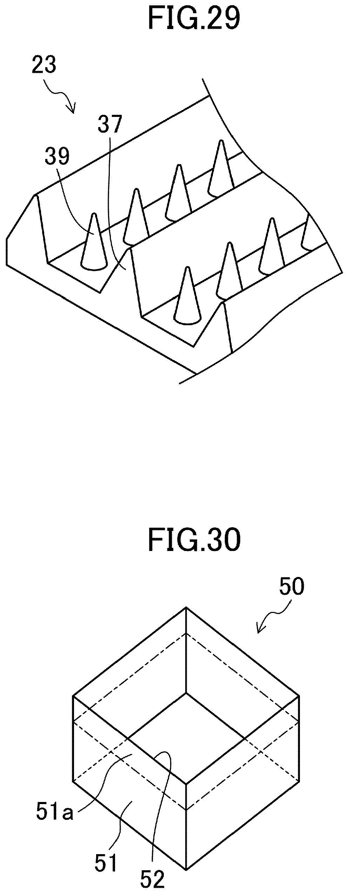

The ambulatory pest trapping device may have combination of ridged pointed protrusions and cone-shaped pointed protrusions. For example, as in the ambulatory pest trapping device 23 illustrated in FIG. 29, combination of ridged pointed protrusions 37 each having a triangular prism shape illustrated in FIG. 21 and a plurality of pointed protrusions 39 each having a conical shape illustrated in FIG. 25 may be used.

The ambulatory pest trapping device may have at least one of ridged pointed protrusions or cone-shaped pointed protrusions.

EXAMPLES

(Evaluation of Trapping Rate)

As illustrated in FIG. 30, a square box 50 (length: 5 cm, width: 5 cm, height: 5 cm) made of commercially available black cardboard (thickness: 0.21 mm) was prepared, and the produced ambulatory pest trapping device was attached to the surface 51a on the upper side 52, which is parts of the four outer surfaces 51 of the box 50.

Next, 100 twospotted spider mites (non-dormant females) were placed inside the box 50, and after 24 hours, the number of twospotted spider mites trapped on pointed protrusions of the ambulatory pest trapping device was counted, and the trapping rate was calculated using the following equation (1). The process was performed a total of three times, and the average value of the trapping rates was determined.

[Math. 1]

$$\text{Trapping Rate (\%)} = \{\text{The number of twospotted spider mites trapped}/100\} \times 100 \quad (1)$$

(Example 1)

(Production of Ambulatory Pest Trapping Device)

Commercially available Kent paper (thickness: 0.21 mm) serving as an intermediate sheet was cut into a size of 10 mm wide and 364 mm long, and commercially available double-sided tapes (manufactured by KIKUSUI TAPE, trade name: KIKUDOUBLE 200, width: 20 mm, thickness: 0.084 mm) as adhesives were attached to both sides of the cut sheet. At this time, the double-sided tapes were attached to cover the entire 10 mm width Kent paper and were adhered to each other so that ridged pointed protrusions made of the double-sided tapes were formed on both ends of the Kent paper in the width direction. Then, the Kent paper to which double-sided tapes had been adhered was creased at intervals of 10 mm in the length direction to produce a bellows-shaped body (i.e., an adhesive sheet in which an intermediate sheet is covered with the adhesives) with a width of 20 mm, a height of 10 mm, and a length of 100 mm.

Further, two sheets each with a width of 10 mm and a length of 100 mm were cut out from commercially available Kent paper (thickness: 0.21 mm) and used as an upper sheet and a lower sheet. Then, the upper sheet and the lower sheet were disposed to face each other, and the adhesive sheet which is the bellows-shaped body intervened therebetween.

Subsequently, from the state, the upper sheet and the lower sheet were pressed toward the adhesive sheet to bring the adhesive sheet into contact with the upper sheet and the lower sheet. Thus, an ambulatory pest trapping device including pointed protrusions was produced.

In such a case, ridged pointed protrusions made of an adhesive (adhesive tape) covering the ends of the intermediate sheet as illustrated in FIG. 4 are provided, and the tip radius of curvature R of each pointed protrusion was 0.084 mm corresponding to half of the thickness of the double-sided adhesive tape, and the sum L of the lengths of the ridged pointed protrusions per unit area (1 cm$^2$) was 62.8 mm/cm$^2$.

The trapping rate for twospotted spider mites was evaluated using the produced ambulatory pest trapping device. The average trapping rate was 80%.

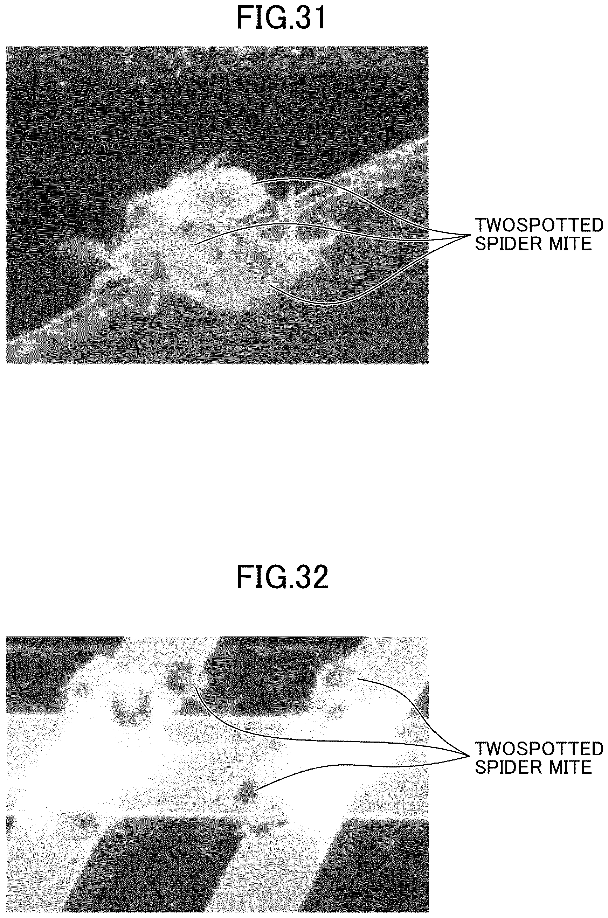

FIG. 31 shows the state where twospotted spider mites are trapped on the pointed protrusion.

(Example 2)

An acrylic adhesive was applied to the surface of a mesh-like molded surface fastener (manufactured by Kuraray Fastening Co., Ltd., trade name: MAGILOCK MX8471) at 2.0 g/m$^2$. Thus, an ambulatory pest trapping device including pointed protrusions in each of which a flange portion of the molded surface fastener was covered with the adhesive was produced.

The tip radius of curvature R in a side portion of the pointed protrusion illustrated in FIG. 18 was 0.1 mm. The tip radius of curvature R in an upper side portion of the pointed protrusion illustrated in FIG. 19 was 0.01 mm. The sum of the lengths of 48 pointed protrusions in the side portion was 28.8 mm (=0.6 mm $\times$ 48)/cm$^2$, and the sum of the lengths of 48 pointed protrusions in the upper side portion was 76.8 mm (=1.6 mm $\times$ 48)/cm$^2$. Thus, the sum L of the lengths of the pointed protrusions was 105.6 mm/cm$^2$.

The produced ambulatory pest trapping device was cut into a size of 20 mm wide and 20 cm long, and the trapping rate for twospotted spider mites was evaluated using the cut piece. The average trapping rate was 87%.

FIG. 32 shows the state where twospotted spider mites are trapped on the pointed protrusion.

(Example 3)

Commercially available double-sided tapes (manufactured by KIKUSUI TAPE, trade name: KIKUDOUBLE 200, width: 20 mm, thickness: 0.084 mm) as adhesives were attached to both sides of commercially available Kent paper (thickness: 0.21 mm). Thereafter, the resultant was punched out to produce an ambulatory pest trapping device (outer shape: 5 cm $\times$ 5cm, pitch between pointed protrusions: 2 mm) having a shape illustrated in FIG. 33.

The tip radius of curvature R of the pointed protrusion was 0.15 mm. The sum L of the lengths of the pointed protrusions was 40 mm/cm$^2$ to 60 mm/cm$^2$. The number of apexes of the pointed protrusions per unit area was 10/cm$^2$ to 15/cm$^2$.

The trapping rate for twospotted spider mites was evaluated using the produced ambulatory pest trapping device. The average trapping rate was 65%.

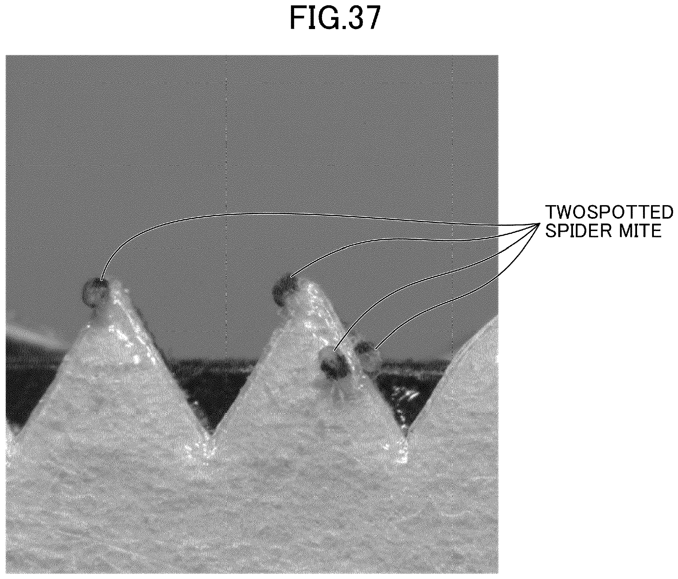

FIG. 37 shows the state where twospotted spider mites are trapped on the pointed protrusion. As can be seen from FIG. 37, twospotted spider mites are trapped at the apexes of the pointed protrusions and the ridged portion.

(Example 4)

A mold in which 25 cones per 1 cm$^2$ could be formed was designed and produced on a sheet of 5 cm wide $\times$ and 50 cm long, and using the mold, polyethylene resin was injection-molded. Thus, a sheet having a plurality of conical protrusions in a pinholder shape was produced. Then, acrylic adhesive was applied to the surface of this resin sheet at 3.2 g/m$^2$. Thus, an ambulatory pest trapping device including pointed protrusions covered with the adhesive was produced.

In the ambulatory pest trapping device, the pitch between the conical pointed protrusions was 1 mm, and the height of each pointed protrusion was 2 mm. The diameter of the bottom portion of the pointed protrusion was 0.9 mm. The tip radius of curvature R of the pointed protrusion illustrated in FIG. 27 was 0.02 mm, and the number of apexes of the conical pointed protrusions per unit area was 100/cm$^2$.

The produced ambulatory pest trapping device was cut into a size of 20 mm wide and 20 cm long, and the trapping rate for twospotted spider mites was evaluated using the cut piece. The average trapping rate was 77%.

(Example 5)

An acrylic adhesive was applied to the surface of a mesh-like molded body (manufactured by C.I. TAKIRONCIVIL Corporation, trade name: N-2, mesh pitch: 1.8 mm $\times$ 1.8 mm, mesh leg thickness: 0.5 mm) at 2.0 g/m$^2$, which was then cut into a size of 5 cm $\times$ 5 cm. Thereafter, the resultant was punched out to produce an ambulatory pest trapping device having a shape illustrated in FIG. 34.

The tip radius of curvature R of the pointed protrusion was 0.05 mm to 0.5 mm. The sum L of the lengths of the pointed protrusions was 10 mm/cm$^2$ to 30 mm/cm$^2$. The number of apexes of the pointed protrusions per unit area was 15/cm$^2$ to 30/cm$^2$.

The trapping rate for twospotted spider mites was evaluated using the produced ambulatory pest trapping device. The average trapping rate was 73%.

(Comparative Example 1)

A commercially available double-sided tape (manufactured by KIKUSUI TAPE, trade name: KIKUDOUBLE 200, width: 20 mm, thickness: 0.084 mm) as an adhesive was attached to one side of commercially available Kent paper (thickness: 0.21 mm). The attached portion was cut into a size of 20 mm wide and 20 cm long and rounded to have a curvature radius of 10 mm in the width direction to form a convex adhesive surface on the outer side. Thus, a semicylindrical ambulatory pest trapping device was produced.

The trapping rate for twospotted spider mites was evaluated using the device. The average trapping rate was 1%.

[Table 1]

|  | Tip radius of curvature R [mm] | Length L [mm/cm$^2$] | Number of apexes P [apexes/cm$^2$] | Average trapping rate [%] |
|---|---|---|---|---|
| Example 1 | 0.084 | 62.8 | - | 80 |
| Example 2 | 0.1, 0.01 | 105.6 | - | 87 |
| Example 3 | 0.15 | 40 to 60 | 10 to 15 | 65 |
| Example 4 | 0.02 | - | 100 | 77 |
| Example 5 | 0.05 to 0.5 | 10 to 30 | 15 to 30 | 73 |
| Comparative Example 1 | - | - | - | 1 |

INDUSTRIAL APPLICABILITY

As described above, the present invention is particularly useful as an ambulatory pest trapping device that traps, with pointed protrusions thereof, ambulatory pests.

DESCRIPTION OF REFERENCE CHARACTERS

1      Ambulatory Pest Trapping Device
2      Upper Sheet
3      Intermediate Sheet
4      Lower Sheet
5      Adhesive (Double-Sided Adhesive Sheet)
6      End of Intermediate Sheet
7      Pointed Protrusion
7a     End of Pointed Protrusion
7b     End of Pointed Protrusion
8      Adhesive Sheet
9      Attaching Adhesive Sheet
10     First Strand
11     Space

15      Ambulatory Pest Trapping Device
16      Ambulatory Pest Trapping Device
17      Ambulatory Pest Trapping Device
18      Ambulatory Pest Trapping Device
19      Ambulatory Pest Trapping Device
20      Second Strand
21      Base
22      Flange Portion
23      Ambulatory Pest Trapping Device
25      Ambulatory Pest Trapping Device
26      Ambulatory Pest Trapping Device
30      Engagement Element
30a     Pointed Protrusion
30b     Stem
31      Flange Portion
36      Pointed Protrusion
37      Pointed Protrusion
38      Pointed Protrusion
39      Pointed Protrusion
39a     Apex of Pointed Protrusion
40      Pore
45      Pointed Protrusion
46      Pointed Protrusion
50      Box
51      Outer Surface of Box
51a     Part of Outer Surface of Box, Surface of Upper Side
52      Upper Side of Box

## Claims

**1.** An ambulatory pest trapping device comprising

a pointed protrusion at least part of which is covered with an adhesive,
a tip radius of curvature of the pointed protrusion being 0.001 mm to 1.0 mm or less.

**2.** The ambulatory pest trapping device of claim 1, wherein
the pointed protrusion is ridged.

**3.** The ambulatory pest trapping device of claim 1, wherein
the pointed protrusion is cone-shaped.

**4.** The ambulatory pest trapping device of claim 2, wherein
a total length of the ridged pointed protrusion per unit area is from 10 mm/cm$^2$ to 1000 mm/cm$^2$ inclusive.

**5.** The ambulatory pest trapping device of claim 3, wherein
the number of apexes of the cone-shaped pointed protrusion is from 10/cm$^2$ to 1000/cm$^2$ inclusive.

**6.** The ambulatory pest trapping device of claim 1, wherein
the pointed protrusion includes at least one of a ridged pointed protrusion or cone-shaped pointed protrusion.

**7.** The ambulatory pest trapping device of any one of claims 1 to 6, wherein
at least part of the ambulatory pest trapping device includes a phosphorescent substance.

**8.** The ambulatory pest trapping device of any one of claims 1 to 7, wherein
the ambulatory pest is a pest of the order *Acarina.*

FIG.1

FIG.2

EP 4 397 180 A1

FIG.3

EP 4 397 180 A1

# FIG.4

# FIG.5

# FIG.6

# FIG.7

5

6

6

3

5

# FIG.8

2

8

4

# FIG.9

# FIG.10

# FIG.11

# FIG.12

# FIG.13

# FIG.14

# FIG.15

130

EXTRUDING DIRECTION

STRETCHING

WIDTH DIRECTION

120

120b

120a

110

Q

CUT LINE

# FIG.16

130

CUT LINE

S

110

120b
120a } 120

STRETCHING

# FIG.17

# FIG.18

# FIG.19

# FIG.20

# FIG.21

# FIG.22

# FIG.23

18

38

# FIG.24

38

R

R

R

# FIG.25

# FIG.26

# FIG.27

# FIG.28

# FIG.29

# FIG.30

EP 4 397 180 A1

## FIG.31

TWOSPOTTED
SPIDER MITE

## FIG.32

TWOSPOTTED
SPIDER MITE

# FIG.33

# FIG.34

# FIG.35

R

41 ⎫
    ⎬ 45
5  ⎭

# FIG.36

R

46

# FIG.37

TWOSPOTTED
SPIDER MITE

## INTERNATIONAL SEARCH REPORT

| | International application No. |
|---|---|
| | **PCT/JP2022/036694** |

**A. CLASSIFICATION OF SUBJECT MATTER**

*A01M 1/14*(2006.01)i
FI:   A01M1/14 E

According to International Patent Classification (IPC) or to both national classification and IPC

**B. FIELDS SEARCHED**

Minimum documentation searched (classification system followed by classification symbols)

A01M1/00 - A01M99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 3118663 U (WATANABE, Hideo) 02 February 2006 (2006-02-02) fig. 2-6 | 1-8 |
| Y | JP 2014-64499 A (SHIMADA CORP.) 17 April 2014 (2014-04-17) fig. 1-6 | 1-8 |
| Y | JP 2000-135044 A (NITTO DENKO CORP.) 16 May 2000 (2000-05-16) fig. 1 | 1-8 |
| Y | JP 2002-272342 A (IKARI SHODOKU KK) 24 September 2002 (2002-09-24) paragraph [0015] | 7-8 |

☐ Further documents are listed in the continuation of Box C.          ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 November 2022** | **29 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/036694**

| Patent document cited in search report | | | Publication date (day/month/year) | Patent family member(s) | Publication date (day/month/year) |
|---|---|---|---|---|---|
| JP | 3118663 | U | 02 February 2006 | (Family: none) | |
| JP | 2014-64499 | A | 17 April 2014 | (Family: none) | |
| JP | 2000-135044 | A | 16 May 2000 | (Family: none) | |
| JP | 2002-272342 | A | 24 September 2002 | (Family: none) | |

Form PCT/ISA/210 (patent family annex) (January 2015)

**EP 4 397 180 A1**

**REFERENCES CITED IN THE DESCRIPTION**

**Patent documents cited in the description**

- JP 2014064499 A